## Europäisches Patentamt

## European Patent Office

## Office européen des brevets

(19)

(11) Veröffentlichungsnummer: **0 155 631**
**B1**

(12)

# EUROPÄISCHE PATENTSCHRIFT

(45) Veröffentlichungstag der Patentschrift:
26.07.89

(51) Int. Cl.⁴: **A 01 B 69/02,** A 01 C 7/00

(21) Anmeldenummer: **85102847.2**

(22) Anmeldetag: **13.03.85**

(54) Spurreisser für ein Arbeitsgerät.

(30) Priorität: **23.03.84 US 592521**

(43) Veröffentlichungstag der Anmeldung:
**25.09.85 Patentblatt 85/39**

(45) Bekanntmachung des Hinweises auf die Patenterteilung:
**26.07.89 Patentblatt 89/30**

(84) Benannte Vertragsstaaten:
**DE FR GB**

(56) Entgegenhaltungen:
**DE-A- 2 216 014**
**FR-A- 2 457 062**
**US-A- 3 828 860**
**US-A- 4 207 950**
**US-A- 4 232 747**

(73) Patentinhaber: **DEERE & COMPANY, 1 John Deere Road, Moline Illinois 61265 (US)**

(72) Erfinder: **Stringfield White, Gregory, 3524 70th Street, 104, Moline Illinois 61265 (US)**

(74) Vertreter: **Feldmann, Bernhard et al, DEERE & COMPANY European Office, Patent Department Steubenstrasse 36-42 Postfach 503, D-6800 Mannheim 1 (DE)**

## Beschreibung

Die Erfindung bezieht sich auf einen Spurreißer für ein Arbeitsgerät, insbesondere für ein Arbeitsgerät mit Sävorrichtungen, die an einen Hauptrahmen anschließbar sind, an den ein innerer Tragarm vertikal schwenkbar angeschlossen ist, der mit einem mit dem Tragarm gelenkig verbundenen, ein Spurreißerwerkzeug aufweisenden Gestänge den Spurreißer bildet, wobei der Spurreißer mittels eines am Hauptrahmen und am Spurreißer angeschlossenen Hydraulikzylinders zwischen einer Transport- und Arbeitsstellung verstellbar ist, dessen eines Ende über einen Gelenkbolzen in einer Schlitzführung aufgenommen ist.

Bei diesem Spurreißer (US-A-4 207 950) greift der Hydraulikzylinder an dem Gestänge mit dem Spurreißerwerkzeug an, wobei die Schlitzführung ausschließlich dafür vorgesehen ist, in der Arbeitsstellung eine Schwimmstellung des Spurreißerwerkzeuges zuzulassen. In der Transportstellung, in der das Gestänge über das Arbeitsgerät zu liegen kommt, entsteht durch die Schlitzführung viel Spiel, was Klappergeräusche hervorruft. Bei der Bewegung aus der Transportstellung in die Arbeitsstellung ist ein sanftes Verschwenken nicht gegeben, da zumindest beim Verstellen des Gestänges zwischen der Vertikal- und Arbeitsstellung das Gestänge infolge der Schlitzführung plötzlich durchrutschen kann, was unerwünscht ist und zu Beschädigungen führen kann.

Bei einem einklappbaren Geräterahmen ist es bekannt (US-A-4 232 747), eine T-förmige Schlitzführung in einem Rahmenteil vorzusehen, wobei sich der lange Schenkel des T in Längsrichtung des Rahmenteils und der kurze Schenkel senkrecht zur Längsrichtung erstreckt. Der Geräterahmen wird über einen Hydraulikzylinder verschwenkt, der einenends am Rahmenteil und über einen an seiner Kolbenstange angelenkten Hebel an dem Geräterahmen angreift, wobei ein weiterer Hebel an seiner Kolbenstange vorgesehen ist, der einen in der T-förmigen Schlitzführung gleitenden Gelenkbolzen aufweist. Dieser ist noch zu seiner Führung in dem T mit einem Schlitten versehen. Über dem Hydraulikzylinder läßt sich nur der Geräterahmen und nicht auch der Rahmenteil verschwenken.

Ferner ist es nicht mehr neu (FR-A-2 457 062), bei einem in der Transportstellung sich vertikal erstreckenden Tragarm und daran angelenktem Gestänge die Bewegung des Gestänges über ein einenends am Arbeitsgerät und anderenends am Gestänge angreifendes Kabel mit Feder zu steuern.

Demgegenüber liegt der Erfindung die Aufgabe zugrunde, den Spurreißer mit der zugehörigen Stellvorrichtung derart auszubilden und anzuordnen, daß eine einwandfreie gleichmäßige Verstellung des Spurreißers gewährleistet ist, wobei in der Arbeitslage des Spurreißers eine schwimmende Stellung des Spurreißers ohne weiteres beibehalten werden kann. Diese Aufgabe ist dadurch gelöst worden, daß die am inneren Tragarm vorgesehene Schlitzführung aus einem sich in Längsrichtung des inneren Tragarmes erstreckenden Schlitzteil und einem sich daran anschließenden, quer zum Schlitzteil verlaufenden Hakenteil besteht, in den der Gelenkbolzen beim Verstellen aus der Transportstellung eingreift. Durch den vorteilhaften Anschluß des Hydraulikzylinders an den Tragarm des Spurreißers, insbesondere durch die Formgebung der Schlitzführung, wird eine gleichmäßige ruckfreie Verstellung des Spurreißers von einer Transportstellung in eine Arbeitsstellung bzw. umgekehrt gewährleistet, wobei der Hakenteil der Schlitzführung in der vertikalen Lage des Spurreißers eine schnelle und einfache Arretierung gewährleistet, wozu die Stellvorrichtung nur ein wenig eingefahren zu werden braucht, bis der Gelenkbolzen der Stellvorrichtung in den Hakenteil der Schlitzführung eingeführt ist. Hierdurch wird auch verhindert, daß während der Transportstellung der Spurreißer hin- und herspringt bzw. in die Arbeitsstellung im freien Fall herunterfällt. Gleichzeitig gewährleistet die Schlitzführung in der Arbeitsstellung des Spurreißers eine Schwimmstellung, so daß der Spurreißer ohne weiteres der Bodenkontur folgen kann. Hierzu ist es vorteilhaft, daß die Schlitzführung aus einem gebogenen Längsschlitz besteht, dessen obere Seitenwand aus einem ersten sich in Längsrichtung des Tragarmes erstreckenden Seitenteil und einem rechtwinklig zum ersten Seitenteil angeordneten zweiten Seitenteil besteht, der als Raststelle mit einer dem Gelenkbolzen des als Stellvorrichtung ausgebildeten Hydraulikzylinders angepaßten Vertiefung ausgebildet ist, wobei die untere Seitenwand aus einem in Längsrichtung des Tragarmes sich erstreckenden Seitenteil und einem dazu quer verlaufenden Seitenteil besteht, die über einen kurvenförmigen Wandteil miteinander verbunden sind, und daß der sich in Längsrichtung des Tragarmes erstreckende Seitenteil des Längsschlitzes mit der Längsmittelachse des Tragarmes einen spitzen Winkel einschließt, der zwischen 5 und 15° groß sein kann.

In weiterer Ausgestaltung der Erfindung ist es vorteilhaft, daß der den Längsschlitz aufweisende Tragarm bzw. das Gestänge über eine Zugfeder und ein mit dieser verbundenes Kabel an den Hauptrahmen angeschlossen sind und daß die Feder bzw. das Kabel an einen am äußeren Gestänge in etwa rechtwinklig angeordneten Hebelarm angeschlossen sind, wobei das äußere Gestänge mit Bezug auf den Tragarm völlig ausgeklappt ist, bevor der Spurreißer seine Arbeitsstellung eingenommen hat. Die Aufhängung des äußeren Lenkers des Spurreißers mittels eines Kabels und einer Zugfeder am Hauptrahmen des Arbeitsgerätes gestattet ein vollständiges Auseinanderklappen der beweglichen Teile des Spurreißers, bevor dieser in seine endgültige Arbeitsstellung verstellt worden ist. Die Zugfeder gestattet die Verwendung eines relativ kurzen Kabels, wobei bei einer weiteren Verschwenkung des Spurreißers in seiner Arbeitsstellung die Zugfeder so weit gedehnt ist, daß der Spurreißer stets der Bodenkontur folgen kann. Hierzu wird der Hydraulikzylinder mittels des Gelenkbolzens in dem Längsschlitz so weit verstellt, bis der Spurreißer seine normale Arbeitsstellung eingenommen hat.

Im folgenden wird die Erfindung anhand von lediglich einen Ausführungsweg darstellenden Zeichnungen näher erläutert. Es zeigt:

Fig. 1 einen Geräterahmen für eine Sämaschine bzw. eine Bodenbearbeitungsmaschine mit seitlich am Rahmen angeordneten Spurreißern,

Fig. 2 und 3 Teilansichten von Führungselementen für die Spurreißer,

Fig. 4 eine Vorderansicht der Spurreißer in angehobener Stellung sowie in abgesenkter Stellung (gestrichelte Linien).

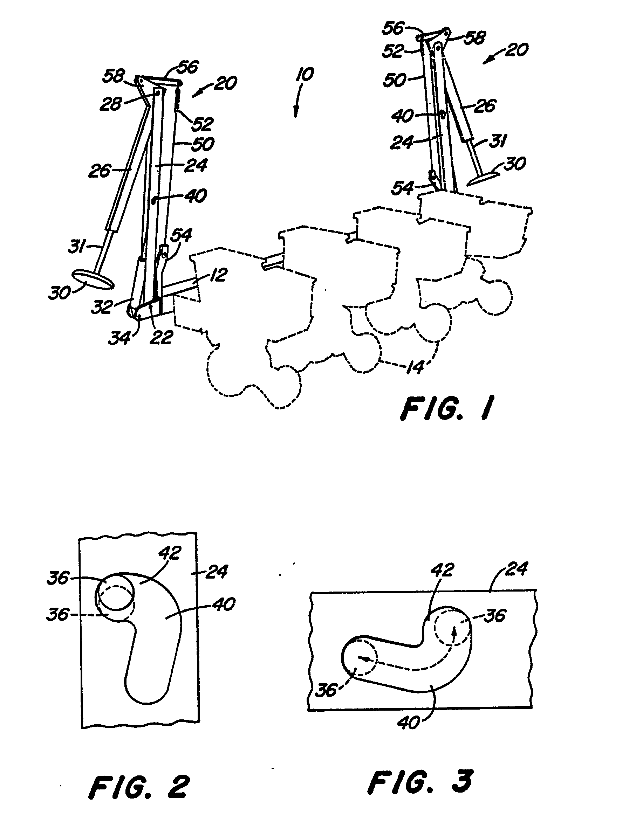

In der Zeichnung ist mit 10 ein landwirtschaftliches Arbeitsgerät bezeichnet, das mit einem Hauptrahmen 12 ausgerüstet ist, an dem zahlreiche nebeneinander angeordnete Sävorrichtungen 14 (siehe gestrichelte Darstellung in Fig. 1) angeschlossen sein können. Es ist jedoch auch möglich, an den Hauptrahmen Bodenbearbeitungswerkzeuge anzuschließen. An dem jeweiligen Ende des Hauptrahmens 12 befinden sich Spurreißer 20, die mittels Gelenkbolzen 22 an dem Hauptrahmen 12 vertikal schwenkbar angeschlossen sind. Die einzelnen Spurreißer 20 bestehen aus einem innenliegenden Tragarm 24 sowie einem äußeren Gestänge 26, die beide über einen Gelenkbolzen 28 gelenkig miteinander verbunden sind. Zur verschiebbaren Aufnahme eines am äußeren Ende eine Spurreißerscheibe 30 aufnehmenden Tragarmes 31 ist das Gestänge 26 rohrförmig ausgebildet. Durch die verschiebbare Aufnahme des Tragarmes 31 im Gestänge 26 kann die Spurreißerscheibe 30 in jede beliebige Position verstellt werden.

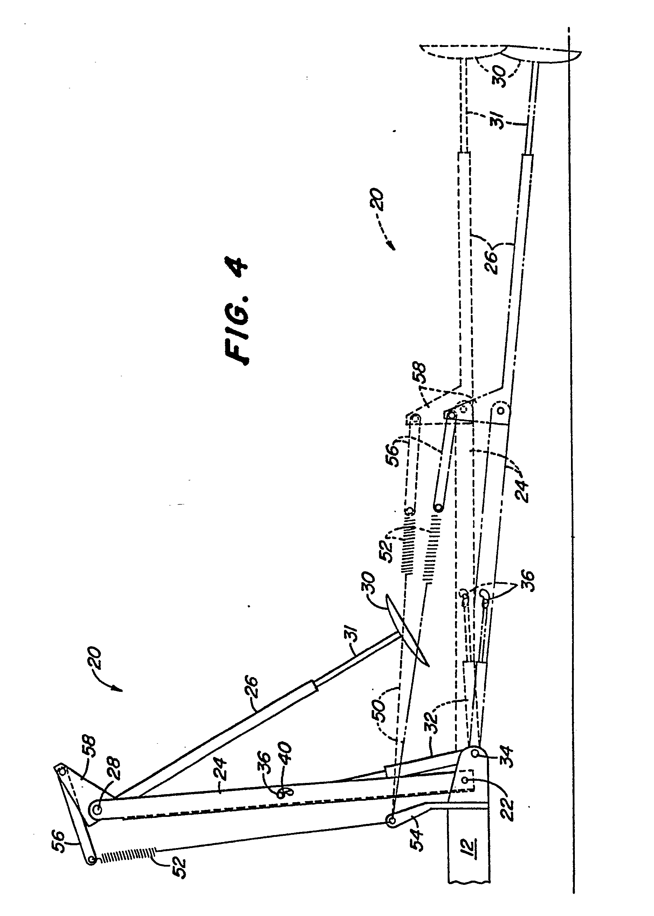

Ein Hydraulikzylinder 32 ist an den Hauptrahmen 12 mittels eines Gelenkbolzens 34 gelenkig angeschlossen. Das kolbenstangenseitige Ende des Hydraulikzylinders 32 weist einen Gelenkbolzen 36 auf, der in einem im Tragarm 24 vorgesehenen Längsschlitz 40 verschiebbar aufgenommen ist. Durch Druckmittelbeaufschlagung des Hydraulikzylinders 32 wird die Kolbenstange des Hydraulikzylinders ausgefahren und der Spurreißer 20 zwischen einer vertikal verlaufenden Stellung und einer in etwa horizontal verlaufenden Arbeitsstellung (siehe Fig. 4) verschwenkt.

Das äußere Gestänge 26 nimmt gemäß Fig. 4 (siehe gestrichelte Darstellung) seitlich vom Hauptrahmen 12 eine horizontal verlaufende Arbeitsstellung ein, wenn der Hydraulikzylinder 32 mit Druckmittel entsprechend beaufschlagt wird. Wie aus Fig. 4 hervorgeht, ist ein Kabel 50 einenends mittels einer Feder 52 an eine Stange 56 und anderenends an eine Strebe 54 angeschlossen. Die Strebe 54 ist mit dem Hauptrahmen 12 fest verbunden, während die Stange 56 mittels eines Gelenkbolzens an einen Hebelarm 58 gelenkig angeschlossen ist, der im Bereich des Gelenkbolzens 28 am innenliegenden Ende des Gestänges 26 rechtwinklig angeordnet ist. Wird der Spurreißer 20 in seine Arbeitsstellung abgesenkt, so bewirken die auf den Hebelarm 58 einwirkenden Stellkräfte, das Gestänge 26 um den Gelenkbolzen 28 zu verschwenken, bis ein in der Zeichnung nicht dargestellter Anlageteil des Gestänges 26 eine weitere Abwärtsverstellung des Gestänges 26 verhindert. Das Gestänge 26 wird so lange nach unten verschwenkt, bis es in die in Fig. 4 in gestrichelten Linien dargestellte Arbeitsstellung verstellt worden ist, in der der zwischen dem Gestänge 26 und dem Tragarm 24 wirkende Anlageteil eine weitere Verschwenkung des Gestänges 26 am Tragarm 24 verhindert.

Die Formgebung des Längsschlitzes 40 (siehe Fig. 2 und 3) im Tragarm 24 ist besonders wichtig, um eine einwandfreie gleichmäßige Verstellung des Spurreißers 20 sicherzustellen. Der Längsschlitz 40 weist mit Bezug auf die Arbeitsstellung des Spurreißers 20 gemäß Fig. 4 einen horizontal verlaufenden Schlitzteil sowie einen an den horizontal verlaufenden Schlitzteil sich rechtwinklig anschließenden, vertikal verlaufenden Schlitzteil auf. Die untere Seite des Längsschlitzes 40 ist im Bereich des horizontal und vertikal verlaufenden Schlitzteiles bogenförmig ausgebildet, während die innenliegende Wand des vertikal verlaufenden Schlitzteiles eine Raststelle bzw. einen Hakenteil 42 aufweist, in dem der Gelenkbolzen 36 aufgenommen werden kann, wenn der Tragarm 24 seine vertikal verlaufende Lage gemäß Fig. 2 einnimmt.

Soll während des Arbeitseinsatzes der Spurreißer 20 aus seiner vertikal verlaufenden Position verstellt werden, so wird der Hydraulikzylinder 32 mit Druckmittel beaufschlagt, um die Kolbenstange des Hydraulikzylinders einzufahren und somit den Gelenkbolzen 36 in die Raststelle 42 des Längsschlitzes 40 gemäß Fig. 2 (gestrichelte Stellung) zu bewegen. Befindet sich der Gelenkbolzen 36 in der in Fig. 2 in gestrichelten Linien dargestellten Stellung, so kann über den Gelenkbolzen 36 eine Stellkraft auf den Tragarm 24 wirken und somit eine Verschwenkung des Tragarmes 24 um den Gelenkbolzen 22 vorgenommen werden, bis dieser seine gewünschte Arbeitsstellung erreicht hat. Aufgrund der vorteilhaften Ausbildung des Längsschlitzes 40 ist die Verschwenkung des Gestänges 26 nach unten gleichmäßig und ruckfrei. Hat der Spurreißer 20 seine Arbeitsstellung erreicht, so wird der Gelenkbolzen 36 durch die Raststelle 42 in seiner Bewegung nicht mehr behindert und kann somit, wie aus der Pfeilrichtung gemäß Fig. 3 hervorgeht, sich im Längsschlitz 40 frei bewegen.

Die an das Kabel 50 angeschlossene Zugfeder 52 unterstützt die gleichmäßige Verschwenkbewegung des Spurreißers und wird, wie aus Fig. 4 hervorgeht, entsprechend gedehnt, bis die am Gestänge 26 angeschlossene Spurreißerscheibe 30 den Boden berührt. Seine größte Länge erreicht der Spurreißer 20, wenn er die in gestrichelten Linien dargestellte Stellung bzw. horizontale Lage eingenommen hat. In dieser Stellung ist die Zugfeder 52 noch nicht auseinandergezogen. Die Zugfeder 52 wird dann auseinandergezogen, wenn der Spurreißer 20 seine normale Arbeitsstellung (siehe strichpunktierte Darstellung bzw. untere Stellung des Spurreißers in Fig. 4) erreicht hat, in der die Spurreißerscheibe 30 etwas in den Boden eingetaucht ist. Die Zugfeder 52 wird auch dann auseinandergezogen, wenn die Spurreißerscheibe 30 im Arbeitseinsatz der Bodenkontur liegt, insbesondere dann, wenn sehr unebenes Gelände vorliegt.

Der Spurreißer 20 kann durch Druckmittelbeaufschlagung des Hydraulikzylinders 32 wieder angehoben werden. Hierzu verschwenkt der innere Tragarm 24 um seinen Gelenkbolzen 22 in eine aufrechte Stellung (siehe ausgezogene Darstellung gemäß Fig. 4).

Der Längsschlitz im Tragarm 24 gewährleistet ein gleichmäßiges Zusammenlegen des Tragarmes 24 und des Gestänges 26 und verhindert ferner bei unebenem Gelände während des Arbeitseinsatzes ein Springen des Spurreißers. Das mit der Zugfeder 52 verbundene Kabel 50 gestattet ferner ein vollständiges Ausfahren des Spurreißers auf die gewünschte Länge, so daß eine einfache Markierung über den gesamten Schwimmstellungsbereich des Spurreißers 20 möglich ist.

## Patentansprüche

1. Spurreißer für ein Arbeitsgerät, insbesondere für ein Arbeitsgerät mit Sävorrichtungen, die an einen Hauptrahmen (12) anschließbar sind, an den ein innerer Tragarm (24) vertikal schwenkbar angeschlossen ist, der mit einem mit dem Tragarm (24) gelenkig verbundenen, ein Spurreißerwerkzeug aufweisenden Gestänge (26) den Spurreißer bildet, wobei der Spurreißer mittels eines am Hauptrahmen (12) und am Spurreißer (20) angeschlossenen Hydraulikzylinders (32) zwischen einer Transport- und Arbeitsstellung verstellbar ist, dessen eines Ende über einen Gelenkbolzen (36) in einer Schlitzführung (40) aufgenommen ist, dadurch gekennzeichnet, daß die am inneren Tragarm (24) vorgesehene Schlitzführung (40) aus einem sich in Längsrichtung des inneren Tragarmes (24) erstreckenden Schlitzteil und einem sich daran anschließenden, quer zum Schlitzteil verlaufenden Hakenteil (42) besteht, in den der Gelenkbolzen (36) beim Verstellen aus der Transportstellung eingreift.

2. Spurreißer nach Anspruch 1, dadurch gekennzeichnet, daß die Schlitzführung aus einem gebogenen Längsschlitz (40) besteht, dessen obere Seitenwand aus einem ersten sich in Längsrichtung des Tragarmes (24) erstreckenden Seitenteil und einem rechtwinklig zum ersten Seitenteil angeordneten zweiten Seitenteil besteht, der als Raststelle mit einer dem Gelenkbolzen (36) des als Stellvorrichtung ausgebildeten Hydraulikzylinders (32) angepaßten Vertiefung ausgebildet ist.

3. Spurreißer nach Anspruch 2, dadurch gekennzeichnet, daß die untere Seitenwand aus einem in Längsrichtung des Tragarmes (24) sich erstreckenden Seitenteil und einem dazu quer verlaufenden Seitenteil besteht, die über einen kurvenförmigen Wandteil miteinander verbunden sind.

4. Spurreißer nach einem oder mehreren der vorherigen Ansprüche, dadurch gekennzeichnet, daß der sich in Längsrichtung des Tragarmes (24) erstreckende Seitenteil des Längsschlitzes (40) mit der Längsmittelachse des Tragarmes einen spitzen Winkel einschließt, der zwischen 5 und 15° groß sein kann.

5. Spurreißer nach einem oder mehreren der vorherigen Ansprüche, dadurch gekennzeichnet, daß der den Längsschlitz (40) aufweisende Tragarm (24) bzw. das Gestänge (26) über eine Zugfeder (52) und ein mit dieser verbundenes Kabel (50) an den Hauptrahmen (12) angeschlossen sind.

6. Spurreißer nach Anspruch 5, dadurch gekennzeichnet, daß die Feder (52) bzw. das Kabel (50) an einen am äußeren Gestänge (26) in etwa rechtwinklig angeordneten Hebelarm (58) angeschlossen sind, wobei das äußere Gestänge (26) mit Bezug auf den Tragarm (24) völlig ausgeklappt ist, bevor der Spurreißer seine Arbeitsstellung eingenommen hat.

## Claims

1. Track marker for an implement, especially for an implement with sowing devices, which are attachable to a main frame (12), to which an inner support arm (24) is vertically pivotally connected, which forms the track marker with a bar (26) having a track marking tool, pivotally connected to the support arm (26), wherein the track marker is adjustable between a transport and a working position by means of a hydraulic cylinder (32) connected to the main frame (12) and to the track marker (20), one end of the hydraulic cylinder being received by way of a pivot pin (36) in a slot guide (40), characterized in that the slot guide (40) provided on the inner support arm (24) consists of a slot part extending in the longitudinal direction of the inner support arm (24) and a hook part (42) running transverse to the slot part, in which hook part the pivot pin (36) engages on adjustment to the transport position.

2. Track marker according to claim 1, characterized in that the slot guide consists of a curved longitudinal slot (40) whose upper side-wall consists of a first side part extending in the longitudinal direction of the support arm (24) and a second side part arranged at right angles to the first side part and which is formed as a detent location with a recess adapted to the pivot pin (36) of the hydraulic cylinder (32) formed as adjusting device.

3. Track marker according to claim 2, characterized in that the lower side-wall consists of a side part extending in the longitudinal direction of the support arm (24) and a side part running transversely thereto, which are connected together by a curved wall part.

4. Track marker according to one or more of the preceding claims, characterized in that the side part of the longitudinal slot (40) extending in the longitudinal direction of the support arm (24) makes an acute angle with the longitudinal central axis of the support arm, which can be between 5 and 15°.

5. Track marker according to one or more of the preceding claims, characterized in that the support arm (24) with the longitudinal slot (40) or the bar (26) is connected to the main frame (12) by a tension spring (52) and a cable (50) connected thereto.

6. Track marker according to claim 5, characterized in that the spring (52) or the cable (50) is connected to a lever arm (58) arranged approximately at right angles on the outer bar (26), whereby the outer bar (26) is fully unfolded with respect to the support arm (24) before the track marker has assumed its working position.

**Revendications**

1. Marqueur pour une machine, en particulier pour une machine comportant des dispositifs de semage qui peuvent être raccordés à un bâti principal (12) auquel est raccordé de façon à pouvoir pivoter verticalement un bras de support intérieur (24) qui forme le marqueur avec une tige (26) articulée au bras de support (24), comportant un outil marqueur, le marqueur pouvant être déplacé au moyen d'un vérin hydraulique (32) articulé au bâti principal (12) et au marqueur (20) entre une position de transport et une position de travail, vérin dont une extrémité est reçue dans un guide à rainure (40) par l'intermédiaire d'un boulon d'articulation (36), caractérisé en ce que le guide à rainure (40) prévu sur le bras de support intérieur (24) comprend une section de rainure s'étendant dans la direction longitudinale du bras de support intérieur (24) et une section de crochet (42) s'y raccordant et dirigée transversalement à la section de rainure, dans laquelle le boulon d'articulation (36) s'engage lors de l'éloignement de la position de transport.

2. Marqueur suivant la revendication 1, caractérisé en ce que le guide à rainure comprend une rainure longitudinale arquée (40) dont la paroi latérale supérieure comprend une première partie latérale s'étendant dans la direction longitudinale du bras de support (24) et une seconde partie latérale disposée orthogonalement à la première partie latérale, qui est conformée en encliquetage avec un creux adapté au boulon d'articulation (36) du vérin hydraulique (32) conformé en dispositif de déplacement.

3. Marqueur suivant la revendication 2, caractérisé en ce que la paroi latérale inférieure comprend une partie latérale s'étendant dans la direction longitudinale du bras de support (24) et une partie latérale s'étendant transversalement à celle-ci, lesquelles sont reliées entre elles par l'intermédiaire d'une partie de paroi incurvée.

4. Marqueur suivant une ou plusieurs des revendications précédentes, caractérisé en ce que la partie latérale de la rainure longitudinale (40) s'étendant dans la direction longitudinale du bras de support (24) fait avec l'axe longitudinal central du bras de support un angle aigu pouvant être compris entre 5 et 15°.

5. Marqueur suivant une ou plusieurs des revendications précédentes, caractérisé en ce que le bras de support (24) comportant la rainure longitudinale (40) et respectivement la tige (26) sont raccordées au bâti principal (12) par l'intermédiaire d'un ressort de traction (52) et d'un câble (50) qui lui est relié.

6. Marqueur suivant la revendication 5, caractérisé en ce que le ressort (52) ou le câble (50) sont raccordés à un bras de levier (58) disposé sensiblement orthogonalement sur la tige extérieure (26), la tige extérieure (26) étant entièrement écartée par rapport au bras de support (24), avant que le marqueur ait pris sa position de travail.

FIG. 1

FIG. 2

FIG. 3

FIG. 4